# EUROPEAN PATENT APPLICATION

(11) **EP 4 650 199 A1**
(43) Date of publication of application: **19.11.2025**
(21) Application number: 23915598.9
(22) Date of filing: 01.09.2023
(51) Int. Cl.: B60J 10/86

(54) **HIDDEN-TYPE OUTER BELT WEATHERSTRIP ASSEMBLY, VEHICLE DOOR STRUCTURE, AND VEHICLE**

(30) Priority: 12.01.2023 CN 202320081721 U; 20.02.2023 CN 202320345851 U
(71) Applicant: ZHEJIANG ZEEKR INTELLIGENT TECHNOLOGY CO., LTD., Ningbo, Zhejiang 315899 (CN); ZHEJIANG GEELY HOLDING GROUP CO., LTD, Hangzhou, Zhejiang 310051 (CN)
(72) Inventor: LI, Zhipeng, Ningbo, Zhejiang 315899 (CN); LI, Yang, Ningbo, Zhejiang 315899 (CN); JI, Liang, Ningbo, Zhejiang 315899 (CN); LIN, Xianghui, Ningbo, Zhejiang 315899 (CN)
(74) Representative: Boult Wade Tennant LLP
(86) International application number: PCT/CN2023/116635
(87) International publication number: WO 2024/148840

(57) **Abstract**

The present application provides a hidden outer weatherstrip assembly, a vehicle door structure, and a vehicle. The hidden outer weatherstrip assembly includes a weatherstrip joint corner, which forms an end of the outer weatherstrip assembly and is provided with a slot; the slot is configured to be in an inserting connection with a mounting bracket fixed to a vehicle door inner panel. By setting the hidden outer weatherstrip assembly with the slot on the weatherstrip joint corner, the present application enables the outer weatherstrip assembly to be connected with the vehicle door inner panel through the mounting bracket and thus to be connected with the vehicle door inner panel through a physical mounting structure, ensuring mounting stability of the outer weatherstrip assembly.

## Description

This patent application claims priority to Chinese Patent Application No. 202320345851.4, filed on February 20, 2023, by ZHEJIANG ZEEKR INTELLIGENT TECHNOLOGY CO., LTD etc., entitled "Vehicle Door Structure and Vehicle" and Chinese Patent Application No. 202320081721.4, filed on January 12, 2023, by ZHEJIANG ZEEKR INTELLIGENT TECHNOLOGY CO., LTD etc., entitled "Hidden Outer Weatherstrip Assembly". The disclosures of the aforementioned applications are hereby incorporated by reference in their entireties.

### TECHNICAL FIELD

The present application relates to a hidden outer weatherstrip assembly, a vehicle door structure, and a vehicle.

### BACKGROUND

Currently, there are more and more vehicle using frameless doors on the market. However, a rear of an outer weatherstrip assembly on a frameless door does not have a mounting structure, which means that the outer weatherstrip assembly is suspended. Therefore, it is necessary to bond the outer weatherstrip assembly to a vehicle door inner panel with tape; However, the outer weatherstrip adhered to the door inner panel with tape is easy to debonding during use, resulting in gaps between the outer weatherstrip assembly and the door inner panel. When moisture and dust enter the gap between the door inner panel and the outer weatherstrip assembly, they can easily cause a decrease in mounting stability of the outer weatherstrip assembly, thereby weakening a scraping effect of the weatherstrip on a vehicle door glass.

### SUMMARY

The present application provides a hidden outer weatherstrip assembly, a vehicle door structure, and a vehicle.

A hidden outer weatherstrip assembly provided in the present application includes a weatherstrip joint corner, wherein the weatherstrip joint corner forms an end of the outer weatherstrip assembly and is provided with a slot; the slot is configured to be in an inserting connection with a mounting bracket fixed to a vehicle door inner panel.

Optionally, further includes a weatherstrip body connected with the weatherstrip joint corner, where the weatherstrip body is configured to be in contact with a vehicle door glass and is spaced apart from the mounting bracket.

Optionally, the weatherstrip joint corner includes a joint corner body, wherein a surface of the joint corner body expected to face an interior of a vehicle is provided with a recessed portion; both the joint corner body located on an upper side of the recessed portion and the joint corner body located on a lower side of the recessed portion protrude towards the interior of the vehicle relative to the recessed portion.

Optionally, the recessed portion is located at an upper part of the joint corner body; a portion of the joint corner body which is located on the lower side of the recessed portion is used for grasping.

Optionally, a surface of the joint corner body, which is expected to face the interior of the vehicle, is provided with a texture and/or a marking.

The present application further includes a vehicle door structure, including the hidden outer weatherstrip assembly as described in any one of the above implementations, as well as a mounting bracket, a vehicle door outer panel and a vehicle door inner panel that are connected with each other; the mounting bracket is fixed on the vehicle door inner panel, and a portion of the mounting bracket is spaced apart from the vehicle door inner panel; the weatherstrip joint corner is inserted into the portion of the mounting bracket.

Optionally, the mounting bracket includes a first plate body and a second plate body that are connected with each other; the first plate body is a portion of the mounting bracket that is spaced apart from the vehicle door inner panel, and the second plate body is a portion of the mounting bracket that is fixedly connected with the vehicle door inner panel; the first plate body is folded in a direction away from the vehicle door inner panel so as to be spaced apart from the vehicle door inner panel.

Optionally, the first plate body is folded in a direction away from the vehicle door inner panel from the connection with the second plate body; one of a side wall of a slot and the first plate body is provided with a clamping hole, and the other is provided with a clamping protrusion; the protrusion is clamped with the clamping hole, and the clamp between the clamping protrusion and the clamping hole is configured such that the clamping protrusion is stopped on a lower side of an upper edge of the clamping hole and exerts upward pressure on the mounting bracket, wherein an upper end surface of the first plate body is abutted with a bottom wall of the slot.

Optionally, a side wall of the slot close to the vehicle door inner panel is provided with the clamping protrusion, or a side of the first plate body facing towards the vehicle door inner panel is provided with the clamping protrusion.

The clamping hole is provided on the first plate body, or the side wall of the slot close to the vehicle door inner panel is provided with the clamping hole.

Optionally, the weatherstrip joint corner includes a joint corner body and an adapter that are connected with each other, the adapter is located in the joint corner body, and the slot is provided on the adapter.

Optionally, the side wall of the slot is provided with a penetrating area, and the clamping protrusion is located in the penetrating area, a lower end of the clamping protrusion is a fixed end that is integrated with an edge of the penetrating area, and an upper end of the clamping protrusion is a free end with a gap between the clamping protrusion and the edge of the penetrating area; the free end of the clamping protrusion is provided with a part for clamping into the clamping hole.

Optionally, the weatherstrip joint corner is formed by injection molding process using the adapter as an insertion; the joint corner body is provided with a groove, wherein the groove is, during injection molding, a part formed on the joint corner body to accommodate the adapter.

The adapter is provided with a matching hole; the groove is provided with an extrusion, the extrusion is, during injection molding, a solid formed on the joint corner body to extend into the matching hole.

Optionally, the weatherstrip joint corner includes a joint corner body and an edge wrapping portion; the vehicle door structure includes the vehicle door outer panel provided on an outer side of the vehicle door inner panel; a rear end of the vehicle door outer panel is provided with a sharp corner; the edge wrapping portion is formed by extending from the joint corner body outwards the joint corner body; the edge wrapping portion wraps and adheres to the sharp corner of the vehicle door outer panel.

Optionally, the weatherstrip joint corner includes a joint corner body, and the outer weatherstrip assembly further includes a weatherstrip body connected with the joint corner body; an end of the joint corner body close to the weatherstrip body is provided with an arc-shaped transition portion, the arc-shaped transition portion, in a direction from an end of the arc-shaped transition portion away from the weatherstrip body to an end of the arc-shaped transition portion close to the weatherstrip body, is formed by extending downward from a top wall of the joint corner body, the arc-shaped transition portion is in contact with the weatherstrip body.

Optionally, the weatherstrip body includes an inner lip edge and an outer lip edge that are integrated as a whole; a lower end of the inner lip edge and a lower end of the outer lip edge are interconnected, and the inner lip edge and the outer lip edge gradually separate upwards from each other from their respective lower ends; a cavity is provided between the vehicle door outer panel and the vehicle door inner panel, the cavity is configured to allow water entering the cavity to flow out of the vehicle through the cavity; an intersection of the weatherstrip body and the weatherstrip joint corner is configured to allow water to flow into the cavity through the intersection.

Optionally, the arc-shaped transition portion is in contact with the inner lip edge; the weatherstrip joint corner located at the arc-shaped transition portion and close to an outer side of the vehicle is aligned with the outer lip edge; the arc-shaped transition portion is configured to allow water to flow from the arc-shaped transition portion to the weatherstrip body.

Optionally, the weatherstrip body is an extrusion-molded product; the weatherstrip joint corner is integrated with the weatherstrip body through injection molding; an end of the weatherstrip joint corner close to the weatherstrip body is provided with a first protruding portion and a second protruding portion, the first protruding portion is formed on the inner lip edge close to an outer side of the vehicle and adheres to the weatherstrip body, the second protruding portion is formed on the inner lip edge close to the outer side of the vehicle and adheres to the inner lip edge.

The present application further provides a vehicle, including the vehicle door structure as described in any one of the above implementations, where the weatherstrip joint corner forms a rear end of the outer weatherstrip assembly.

The application further provides a hidden outer weatherstrip assembly, including a weatherstrip joint corner, where the weatherstrip joint corner includes a joint corner body and an edge wrapping portion; the weatherstrip joint corner forms a rear end of the outer weatherstrip assembly; the edge wrapping portion is formed by extending from the joint corner body outwards the joint corner body; the edge wrapping portion is configured to wrap and adhere to a sharp corner of the vehicle door outer panel.

Optionally, a surface of the joint corner body expected to face an interior of a vehicle is provided with a recessed portion; both the joint corner body located on an upper side of the recessed portion and the joint corner body located on a lower side of the recessed portion protrude towards the interior of the vehicle relative to the recessed portion.

Optionally, the recessed portion is located at an upper part of the joint corner body; a portion of the joint corner body located on the lower side of the recessed portion is used for grasping.

Optionally, a surface of the joint corner body expected to face the interior of the vehicle is provided with a texture and/or a marking.

Optionally, the outer weatherstrip assembly further includes a weatherstrip body coupled with the joint corner body; an end of the joint corner body close to the weatherstrip body is provided with an arc-shaped transition portion, the arc-shaped transition portion, in a direction from an end of the arc-shaped transition portion away from the weatherstrip body to an end of the arc-shaped transition portion close to the weatherstrip body, is formed by extending downward from a top wall of the joint corner body, the arc-shaped transition portion is in contact with the weatherstrip body.

Optionally, the arc-shaped transition portion is in contact with the inner lip edge; the weatherstrip joint corner located at the arc-shaped transition portion and close to an outer side of the vehicle is aligned with the outer lip edge; the arc-shaped transition portion is configured to allow water to flow from the arc-shaped transition portion to the weatherstrip body.

Optionally, the weatherstrip body is an extrusion-molded product; the weatherstrip joint corner is integrated with the weatherstrip body through injection molding; an end of the weatherstrip joint corner close to the weatherstrip body is provided with a first protruding portion and a second protruding portion, the first protruding portion is formed on the inner lip edge close to the outer side of the vehicle and adheres to the weatherstrip body, and the second protruding portion is formed on the inner lip edge close to the outer side of the vehicle and adheres to the inner lip edge.

The present application further provides a vehicle, including the hidden outer weatherstrip assembly as described in any one of the about implementations.

Optionally, further includes an inner weatherstrip, the inner weatherstrip is provided with a joint corner located at its rear end, and the joint corner has a portion extending to a lower side of the weatherstrip joint corner.

In summary, by setting a hidden outer weatherstrip assembly with a slot on it, the present application enables the outer weatherstrip assembly to be connected with the vehicle door inner panel through a mounting bracket and thus to be connected with a vehicle door inner panel through a physical mounting structure, ensuring mounting stability of the outer weatherstrip assembly.

### BRIEF DESCRIPTION OF DRAWINGS

FIG. 1 is a schematic structural diagram of a vehicle door structure in a first embodiment of the present application.
FIG. 2 is a schematic structural diagram of a vehicle door inner panel and a mounting bracket in FIG. 1.
FIG. 3 is a schematic structural diagram of the mounting bracket in FIG. 2.
FIG. 4 is a sectional view of a vehicle door structure in the first embodiment of the present application.
FIG. 5 is an enlarged partial view of region A in FIG. 4.
FIG. 6 is a schematic structural diagram of a hidden outer weatherstrip assembly being matched with a vehicle door sheet metal in a second embodiment of the present application (where a dashed arrow indicates a posture of an outer weatherstrip assembly a door glass after being matched, and a solid arrow indicates a posture of the outer weatherstrip assembly and the door glass before being matched).
FIG. 7 is a stereoscopic view of the hidden outer weatherstrip assembly in FIG. 6.
FIG. 8 is a first perspective stereoscopic view of a weatherstrip joint corner being matched with a weatherstrip body in FIG. 7.
FIG. 9 is a second perspective stereoscopic view of a weatherstrip joint corner being matched with a weatherstrip body in FIG. 7.
FIG. 10 is a third perspective stereoscopic view of a weatherstrip joint corner being matched with a weatherstrip body in FIG. 7.
FIG. 11 is a schematic diagram of a weatherstrip joint corner, a weatherstrip body and a door glass after being matched in the second embodiment of the present application.
FIG. 12 is a schematic diagram of a vehicle door outer panel, a vehicle door inner panel and an outer weatherstrip assembly in a third embodiment of the present application.
FIG. 13 is a first schematic diagram of an outer weatherstrip assembly, a mounting bracket, a vehicle door inner panel, and a vehicle door outer panel after being matched in the third embodiment of the present application.
FIG. 14 is a first schematic diagram of a weatherstrip joint corner in the third embodiment of the present application.
FIG. 15 is a second schematic diagram of a weatherstrip joint corner in the third embodiment of the present application.
FIG. 16 is a schematic diagram of a weatherstrip joint corner, an adapter and a mounting bracket in the third embodiment of the present application.
FIG. 17 is a second schematic diagram of an outer weatherstrip assembly, a mounting bracket, a vehicle door inner panel, and a vehicle door outer panel after being matched in the third embodiment of the present application.
FIG. 18 is a schematic diagram of an adapter and a mounting bracket after being matched in the third embodiment of the present application (with a weatherstrip joint corner being hidden).
FIG. 19 is a comparative schematic diagram of an outer weatherstrip assembly and a mounting bracket before and after being matched in the third embodiment of the present application (obtained after cutting an outer weatherstrip assembly and a mounting bracket at line II in FIG. 18).
FIG. 20 is a partial exploded view of a vehicle door structure in the third embodiment of the present application.
FIG. 21 is a partial exploded view of a vehicle door structure in the third embodiment of the present application (where the adapter has been assembled into the joint corner body).
FIG. 22 is a schematic structural diagram of a rear door in a possible embodiment of the present application.
FIG. 23 is a schematic diagram of a position of a position supplement portion relative to a vehicle door outer panel and a vehicle door inner panel in the third embodiment of the present application.
FIG. 24 is a schematic diagram of a position supplement portion in the third embodiment of the present application.

The corresponding reference numbers in the drawings are that:
the first embodiment relates to:
a10-Vehicle door inner panel, a20-Outer weatherstrip end piece, a21-Slot, a22-Clamping protrusion, a30-Mounting bracket, a31-First plate body, a311-clamping hole, a32-Second plate body, a321-Through hole, a33-Reinforcing rib.

The second embodiment relates to:
b10-weatherstrip body, b20-weatherstrip joint corner, b21-Main body, b211-First opening, b212-Inner side wall, b2121-recessed portion, b2123-Identification area, b213-Outer side wall, b2131-Third opening, b214-Top wall, b2141-Arc-shaped transition portion, b215-End wall, b22-Edge wrapping portion, b23-Second opening, b231-Mounting protrusion, b30-Vehicle sheet metal, b40-Vehicle door glass, b50-Inner weatherstrip, b501-Joint corner portion, b60-Matching boundary.

The third embodiment relates to:
1-Vehicle door outer panel, 2-Vehicle door inner panel, 3-Mounting bracket, 31-First plate body, 311-clamping hole, 32-Second plate body, 4-weatherstrip joint corner, 41-Slot, 411-Clamping protrusion, 412-Penetrating area, 42-Joint corner body, 421-recessed portion, 422-Arc-shaped transition portion, 423-groove, 424-Protrusion, 425-First protruding portion, 426-Second protruding portion, 427-Position supplement portion, 43-edge wrapping portion, 44-Adapter, 441-Matching hole, 45-weatherstrip body, 451-Inner lip edge, 452-Outer lip edge, 453-Trench, 5-Cavity.

### DESCRIPTION OF EMBODIMENTS

The following will provide a clear and comprehensive description of the technical solution in embodiments of the present application in conjunction with the accompanying drawings. Obviously, the described embodiments are only a part of the embodiments of the present application, not all of them. All other embodiments obtained based on the embodiments in the present application by the ordinary person skilled in the art without creative labor are within the protection scope of the present application.

It should be noted that all directional indications (such as up, down, left, right, front, back, etc.) in the embodiments of the present application are only used to explain the relative position relationship and motion of each component in a specific posture (as shown in the accompanying drawings). If the specific posture changes, the directional indication will further change accordingly.

In the present application, unless otherwise specified and limited, the terms "connection", "fixation", etc. should be broadly understood. For example, "fixation" can be a fixed connection, a detachable connection, or an integrated structure; it can be a mechanical connection or an electrical connection; it can be direct connection or indirect connection through an intermediate medium, and can be a connection within two components or an interaction relationship between two components, unless otherwise limited. For the ordinary person skilled in the art, the specific meanings of the above terms in the present application can be understood according to the specific situation.

In addition, if there are descriptions related to "first", "second", etc. in the embodiments of the present application, the descriptions of "first", "second", etc. are only for descriptive purposes and cannot be understood as indicating or implying their relative importance or implying the number of technical features indicated. Therefore, the features that are limited to "first" and "second" can explicitly or implicitly include at least one of these features. In addition, the meaning of "and/or" mentioned throughout the text includes three parallel schemes. Taking "B and/or A" as an example, it includes scheme B, scheme A, or a scheme that satisfies both B and A simultaneously. In addition, the technical solutions between various embodiments can be combined with each other, but they must be based on what the ordinary person skilled in the art can achieve. When the combination of technical solutions is contradictory or impossible to implement, it should be considered that this combination of technical solutions does not exist and is not within the protection scope claimed by this application.

### First embodiment

The present application puts forward a vehicle door structure.

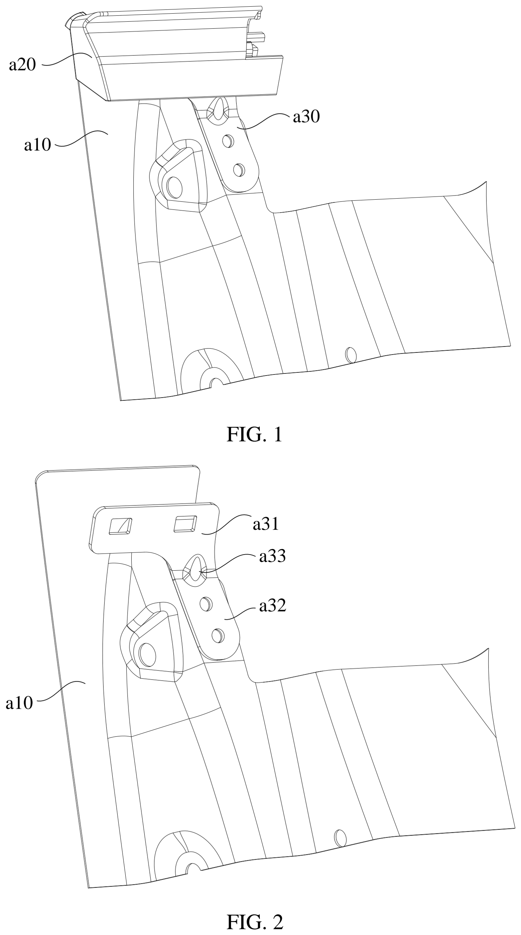

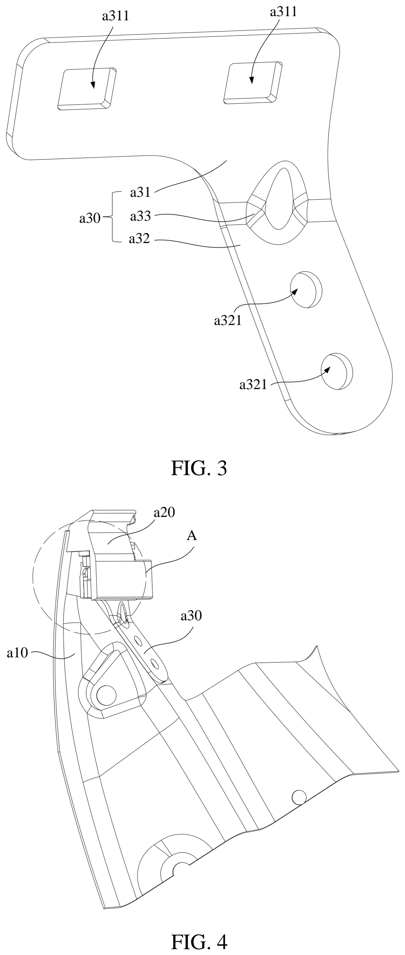

In an embodiment of the present application, as shown in FIG. 1 to FIG. 5, the vehicle door structure includes a vehicle door inner panel a10, an outer weatherstrip assembly, and a mounting bracket a30. Due to the manifested fact that only a part of the outer weatherstrip assembly located at its end is shown, for ease of description, this part is referred to as an outer weatherstrip end piece a20. In the present embodiment, the outer weatherstrip end piece a20 is provided with a slot a21. A mounting bracket a30 is fixed to the vehicle door inner panel a10. A part of the mounting bracket a30 is spaced apart from the vehicle door inner panel a10 and inserted into the slot a21. A side of the outer weatherstrip end piece a20 facing towards the vehicle door inner panel a10 is abutted with the vehicle door inner panel a10.

It should be noted that the prior art related to the above description of this embodiment include: an increasing number of frameless vehicle doors with hidden outer weatherstrip structures are being used in developed vehicle models. However, a rear part of such an outer weatherstrip structure is bonded to the vehicle door inner panel through adhesion. Such a structure is prone to debonding during use, thereby a gap appears where the outer weatherstrip and vehicle door inner panel are matched, causing negative impacts on vehicle quality and reputation.

In view of this, the present embodiment solves the problems of the above prior art by providing a mounting bracket a30 on the vehicle door inner panel a10 for the mounting of the outer weatherstrip end piece a20. In this embodiment, a lower end of the mounting bracket a30 is connected to the vehicle door inner panel a10, and an upper end is spaced apart from the vehicle door inner panel al0. When the outer weatherstrip end piece a20 is installed on the mounting bracket a30, a part of the outer weatherstrip end piece a20 close to the vehicle door inner panel a10 is abutted with the vehicle door inner panel a10 and can seal a gap formed between the mounting bracket a30 and the vehicle door inner panel a10. With this arrangement, stability of installing the outer weatherstrip end piece a20 on the vehicle door inner panel a10 can be increased, and the part of the outer weatherstrip end piece a20 is abutted with the vehicle door inner panel a10, which can ensure aesthetic appearance of the vehicle door structure and prevent moisture from entering an interior of the vehicle door and causing damage to its structure or eletrical circuits. It can be understood that the outer weatherstrip end piece a20 is a rear end of the outer weatherstrip assembly. In an embodiment, the mounting bracket a30 includes a first plate body a31 and a second plate body a32 connected with each other. The first plate body a31 is spaced apart from the vehicle door inner panel a10, and the second plate body a32 is fixed to the vehicle door inner panel a10. A width of the first plate body a31 is greater than that of the second plate body a32.

Specifically, in an embodiment, a width direction is a left-right direction. The first plate body a31 is folded in a direction away from the vehicle door inner panel a10 from a connection where the first plate body a31 is connected with the second plate body a32. That is, the first plate body a31 is connected with the second plate body a32 at a certain angle. The width of the first plate body a31 is adapted according to the structure of the outer weatherstrip end piece a20, and a folding angle of the first plate body a31 is configured according to a structure of the vehicle door inner panel a10 and a size of the outer weatherstrip end piece a20, ensuring that the first plate body a31 is spaced apart from the vehicle door inner panel a10 and a part of the structure of the outer weatherstrip end piece a20 can be accommodated at the spaced position. A side of the outer weatherstrip end piece a20 away from the first plate body a31 is abutted with the vehicle door inner panel a10, and a width of the second plate body a32 is configured according to a size of the vehicle door inner panel a10, such that the second plate body a32 can be stably fixed to the vehicle door inner panel a10. In this way, by changing a structure of the mounting bracket a30 in adaptation to the vehicle door inner panel a10 of various vehicles, modification of the door structure is avoided, design cost is saved, and a universality of the mounting bracket a30 is increased. At the same time, by increasing the width of the first plate body a31 to increase a contact area between the outer weatherstrip end piece a20 and the first plate body a31, the mounting stability of the weatherstrip is increased. In some other embodiments, the width of the first plate body a31 is equal to the width of the second plate body a32.

**In** an embodiment, there is a through hole 321 on the second plate body a32, which through hole 321 is used for a fastener to pass through for connecting the second plate body a32 with the vehicle door inner panel a10.

Specifically, in the present embodiment, a rivet is selected as the fastener, the rivet passes through the through hole 321 to rivet the second plate body a32 to the vehicle door inner panel a10. This is because during an assembly process, due to a compact structure of a frameless vehicle door, there is less remaining mounting space, thus it is difficult to use other connectors to fix the second plate body a32 and the vehicle door inner panel a10. Such arrangement facilitates assembly personnel to assemble the mounting bracket a30, and improves production efficiency. In some other embodiments, the second plate body a32 is welded to the vehicle door inner panel a10.

**In** an embodiment, there are a plurality of through holes 321, and the plurality of through holes 321 are distributed at intervals along a length direction of the second plate body a32. Each through hole 321 has a fastener passing through it.

Specifically, in an embodiment, there are two through holes 321. By increasing a number of rivets and through holes 321, the second plate body a32 can be riveted at multiple positions to the vehicle door inner panel a10. Such arrangement can increase the stability of installing the second plate body a32 on the vehicle door inner panel a10. In some other embodiments, there is one through hole 321.

In an embodiment, the first plate body a31 is provided with a clamping hole a311, and a side wall of the slot a21 close to vehicle door inner panel a10 is provided with a clamping protrusion a22. The clamping protrusion a22 is used to clamp into the clamping hole a311, and at least one side of the first plate body a31 is abutted with a side wall of the slot a21.

Specifically, when the outer weatherstrip end piece a20 is installed on the first plate body a31, the first plate body a31 is inserted into the slot a21, and the clamping protrusion a22 in the slot a21 is used to clamp into the clamping hole a311 of the first plate body a31, and can press against an upper side of the clamping hole a311. A length of the clamping protrusion a22 is greater than or equal to a thickness of the first plate body a31. Such arrangement can ensure that the first plate body a31 is firmly inserted into the slot a21, increasing the mounting stability of the outer weatherstrip end piece a20. In some other embodiments, a side of the first plate body a31 facing the vehicle door inner panel a10 is provided with a second clamping protrusion, and a side wall of the slot a21 close to the vehicle door inner panel a10 has a second clamping hole. The second clamping protrusion is used to clamp into the second clamping hole.

In an embodiment, two opposite side surfaces of the first plate body a31 are respectively abutted with the two side walls of the slot a21, and an upper end surface of the first plate body a31 is abutted with a bottom wall of the slot a21.

Specifically, the first plate body a31 is tightly matched with the slot a21, that is, the two opposite side surfaces of the first plate body a31 are respectively abutted with the two side walls of the slot a21, thereby increasing friction force between the first plate body a31 and the slot a21. Such arrangement can further prevent the outer weatherstrip end piece a20 from loosening from the first plate body a31 and increase the stability of the outer weatherstrip end piece a20 installed on the first plate body a31. In some other embodiments, a side surface of the first plate body a31 facing towards clamping protrusion a22 is abutted with a side wall of the slot a21 where the clamping protrusion a22 is provided.

In an embodiment, there are a plurality of clamping holes a311, and the plurality of clamping holes a311 are distributed at intervals along the width direction of the first plate body a31. The slot is provided with a plurality of clamping protrusions a22 corresponding to the plurality of clamping holes a311, with each clamping protrusion a22 being clamped into each clamping hole a311, respectively.

Specifically, in the present embodiment, there are two clamping holes a311. By increasing a number of the clamping holes a311 and the clamping protrusions a22, the first plate body a31 can be connected at multiple positions with the outer weatherstrip end piece a20. Such arrangement can increase the stability of installing the outer weatherstrip end piece a20 on the first plate body a31. In some other embodiments, there is one clamping hole a311.

In an embodiment, the first plate body a31 and the second plate body a32 are formed as one-piece.

Specifically, integrating the first plate body a31 and the second plate body a32 can shorten production time of the mounting bracket a30. Such arrangement can improve production efficiency, and save production costs. Besides, an one-piece molded workpiece has better quality and hardness, thereby improving service life of the mounting bracket a30. In some other embodiments, the first plate body a31 is welded to the second plate body a32.

In an embodiment, a reinforcing rib a33 is provided at a connection between the first plate body a31 and the second plate body a32.

Specifically, providing the reinforcement rib a33 at the connection between the first plate body a31 and the second plate body a32 can increase stability of the connection between the first plate body a31 and the second plate body a32. Such arrangement can reduce an aging rate at the connection between the first plate body a31 and the second plate body a32 during long-term use, ensuring a stable connection between the first plate body a31 and the second plate body a32 and improving the service life of the mounting bracket a30.

The present application further provides a vehicle, the vehicle includes a vehicle frame and a vehicle door structure, where the vehicle door structure is rotatably mounted on the vehicle frame. Reference could be made to the above embodiments in regard to the details of the vehicle door structure. As the vehicle may be provided with all the technical solutions of the above embodiments, it has at least all the beneficial effects brought by the technical solutions of the above embodiments, which will not be repeated here.

### Second embodiment

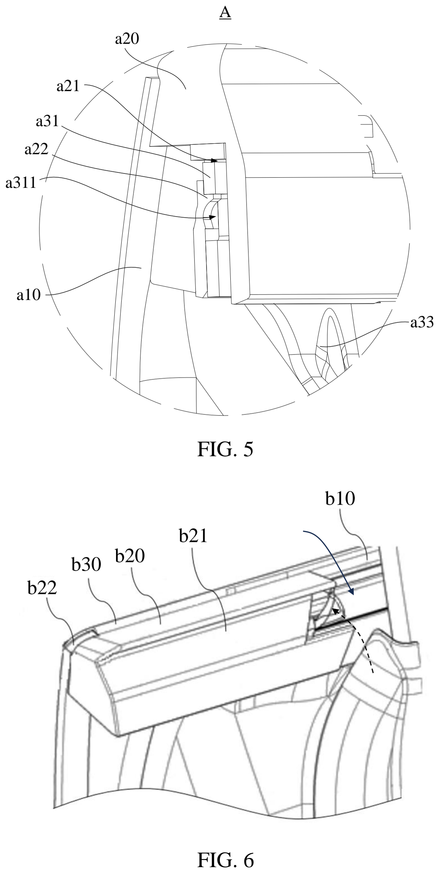

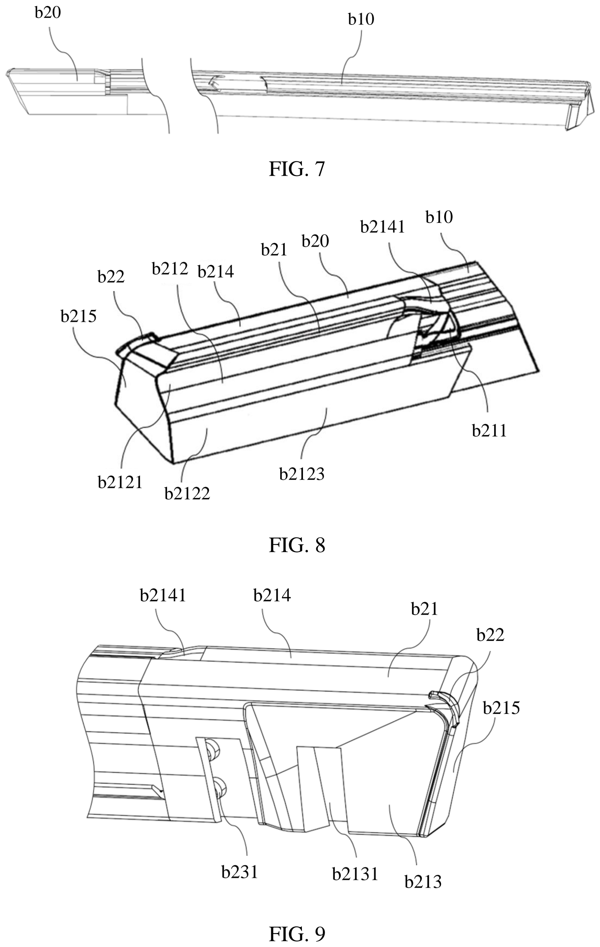

As shown in FIG. 6 and FIG. 7, in an embodiment, a hidden outer weatherstrip assembly and its associated vehicle door structure are illustrated. In the present embodiment, the outer weatherstrip assembly is set on a vehicle door sheet metal b30 with a sharp corner.

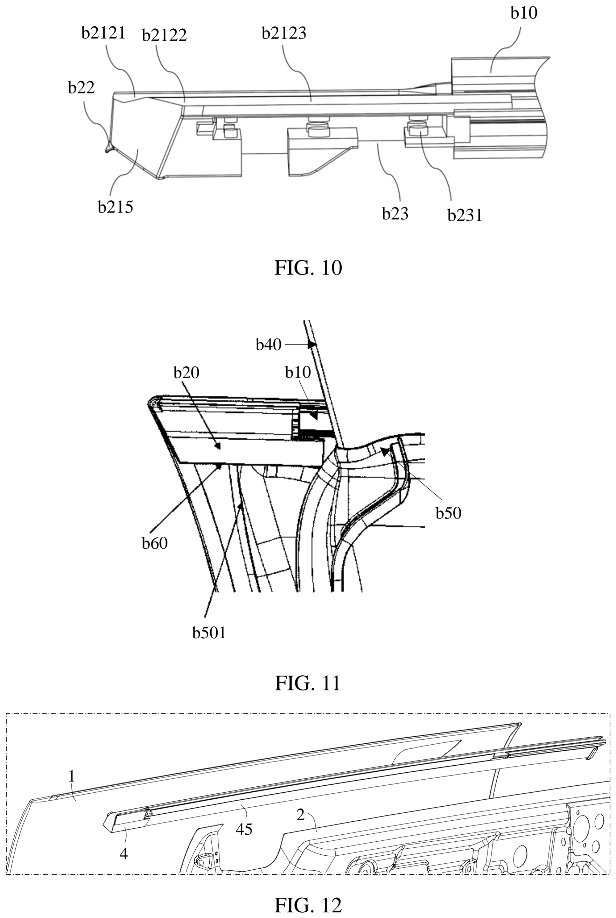

In an embodiment, the outer weatherstrip assembly includes a weatherstrip body a10 and a weatherstrip joint corner b20 provided on an end side of the weatherstrip body. The weatherstrip joint corner b20 forms a rear end of the outer weatherstrip assembly, and is connected with the weatherstrip body a10 in a matching manner. The weatherstrip joint corner b20 may basically adopt a structure of the outer weatherstrip end piece a20 in an aforesaid embodiment. As shown in FIG. 9 and FIG. 10, similar to the outer weatherstrip end piece a20 in an aforesaid embodiment, the weatherstrip joint corner b20 is provided with a groove with an opening facing downwards, which groove is used to form an mounting point on the weatherstrip joint corner b20, so that the weatherstrip joint corner b20 can be matched with other components of the vehicle door and thus installed on the vehicle door sheet metal b30. Thanks to the manner of the installation of the weatherstrip joint corner b20 on the vehicle door sheet metal b30, the rear end of the outer weatherstrip assembly will not have any mounting stability issues caused by adhesive failure.

As shown in FIG. 8 and FIG. 9, the weatherstrip joint corner b20 includes a main body b21, wherein a front end of the main body b21 is provided with a first opening b211 that accommodates the weatherstrip body a10. A rear end of the main body b21 is closed and located near a top rear end of the vehicle door sheet metal b30. The rear end of the main body b21 does not exceed the top rear end of the vehicle sheet metal b30, so that the weatherstrip joint corner b20 is hidden inside the vehicle door sheet metal b30. At the same time, an edge wrapping area of the vehicle door sheet metal b30 and an opening area on an end side of the weatherstrip body a10 can be covered to enhance appearance.

The main body b21 includes an inner side wall b212, an outer side wall b213, a top wall b214, and a rear end wall b215. The rear end wall b215 is connected with the inner side wall b212, the outer side wall b213, and the top wall b214. The outer side wall b213 is provided near the vehicle door sheet metal b30. There is a gap between the vehicle door sheet metal b30 and a connection corner where the outer side wall b213 is connected with the top wall b214 and the rear end wall b215.

**In** the present embodiment, the weatherstrip joint corner b20 further includes an edge wrapping portion b22 provided at the top corner of the main body b21. The edge wrapping portion b22 is located at a connection of the outer side wall b213 with the rear end wall b215 and the top wall b214, and protrudes outward, that is, in a direction away from the outer side wall b213. The edge wrapping portion b22 is arc-shaped and corresponds to the sharp corner of the vehicle door sheet metal b30. The edge wrapping portion b22 adapts to the sharp corner of the vehicle door sheet metal b30, so that a gap between the weatherstrip joint corner b20 and the vehicle door sheet metal b30 as well as the sharp corner of the vehicle door sheet metal b30 are covered. The overall structure is a smooth transition structure, thereby ensuring that the sharp corner of the vehicle door sheet metal b30 will not collide with a user's limbs when the door is opened. In other words, the edge wrapping portion b22 is provided at the top corner of the main body b21 of the weatherstrip joint corner b20 and closely fitted to the sharp corner of the vehicle door sheet metal, which can make the vehicle door sheet metal less likely to collide with limbs when the vehicle door is opened.

It should be noted that the background conditions corresponding to the previously provided edge wrapping portion b22, which ensuring that the sharp corner of the vehicle door sheet metal b30 will not collide with the user's limbs when the door is opened, include:
with rapid development of vehicle technology, more and more frameless vehicle doors are designed and adopted, where performance of components such as vehicle door sheet metal, door glass, and sealing strips and the like has further been greatly improved, optimizing safety of the frameless vehicle doors and driving experience. The weatherstrip is a type of sealing strips that can remove water droplets and dust on a surface of a window glass when lifting or lowering the window glass. In order to improve appearance quality of vehicles, hidden outer weatherstrip are often used. In related technologies, when a vehicle door with a hidden outer weatherstrip is opened, a metallic part at a back end of the vehicle door sheet metal is prone to directly collide with the passenger, which is very painful and greatly impacts user experience. Therefore, it is necessary to provide an improved hidden outer weatherstrip assembly to solve the above problems.

Based on the above, in order to solve the problem of a vehicle door with a hidden outer weatherstrip assembly easily colliding with a passenger when the door is opened, an embodiment of the present disclosure provides an edge wrapping portion b22 on the weatherstrip joint corner b20, and further provides a structurally simple and well protected outer weatherstrip assembly.

Please continue to refer to FIG. 9 and FIG.10. The main body b21 includes a second opening b23 and a third opening b2131. The second opening b23 is provided at a lower part of the main body b21, and the third opening b2131 is provided on the outer side wall b213 of the main body b21. The second opening b23 is connected with the third opening b2131. Multiple mounting protrusions b231 are provided inside the second opening b23. The second opening b23, the third opening b2131, and the mounting protrusion b231 are matched with other components of the vehicle door to ensure that the hidden outer weatherstrip assembly can be easily and conveniently installed on the vehicle door sheet metal b30.

An inner side wall b212 of the main body b21 includes a recessed portion b2121 and a gripping portion b2122. The recessed portion b2121 is disposed at an upper part of the inner side wall b212 and faces the outer side wall b213, and the gripping portion b2122 is disposed at a lower part of the inner side wall b212. The thickness of an upper part of the main body b21 is smaller than that of the lower part of the main body b21. To open the frameless vehicle door, a user often grip a rear end of the vehicle door for opening and closing the door. The recessed portion b2121 provides a natural bending placement area for the user's fingers, while the gripping portion b2122 provides a comfortable grip experience for the user, ensuring a comfortable user experience.

A surface of the gripping portion b2122 can be textured to increase the friction force when the user grips the weatherstrip joint corner b20 and prevent slipping. The weatherstrip body a10 is a component hidden inside the vehicle door, and the weatherstrip joint corner b20 is a component that can be directly observed by the user and exposed on a top end side of the vehicle door sheet metal b30. The texture is added to improve sense of texture of the weatherstrip joint corner b20 and enhance appearance quality.

The surface of the gripping portion b2122 can further be provided with an identification area b2123. The identification area b2123 can be used by manufacturers or users to identify, such as a manufacturer brand, a product model, a creative pattern and the like, for the convenience of enterprise promotion and advertising.

An end of the top wall b214 of the main body b21 close to the weatherstrip body a10 is provided with an arc-shaped transition portion b2141. The arc-shaped transition portion b2141 extends downward from the top wall b214 and is flush with an edge of the weatherstrip body a10. The arc-shaped transition portion b2141 makes a connection between an extrusion lip of the weatherstrip body a10 and the weatherstrip joint corner b20 smoother, ensuring that the components at the connection are not in a messy match.

The weatherstrip joint corner b20 is injection molded. This molding method can ensure stability of the weatherstrip joint corner b20 and facilitate mass production.

Please further refer to FIG. 11. The vehicle door structure provided in an embodiment further includes a vehicle door glass b40 and an inner weatherstrip b50, where the vehicle door glass b40 is matched with the weatherstrip body a10 (matching manners between the vehicle door glass b40 and the outer weatherstrip assembly are known and thus will not be elaborated here). The inner weatherstrip b50 is provided with a joint corner portion b501 located at its rear end. The joint corner portion b501 has a part extending to a lower side of the weatherstrip joint corner b20 and being in contact with the weatherstrip joint corner b20, to form a matching boundary b60 with the weatherstrip joint corner b20 in appearance. Such design can ensure that a rear upper part of the vehicle door structure gives feeling of compact matching, thereby ensuring the aesthetic appearance of the vehicle door structure.

### Third embodiment

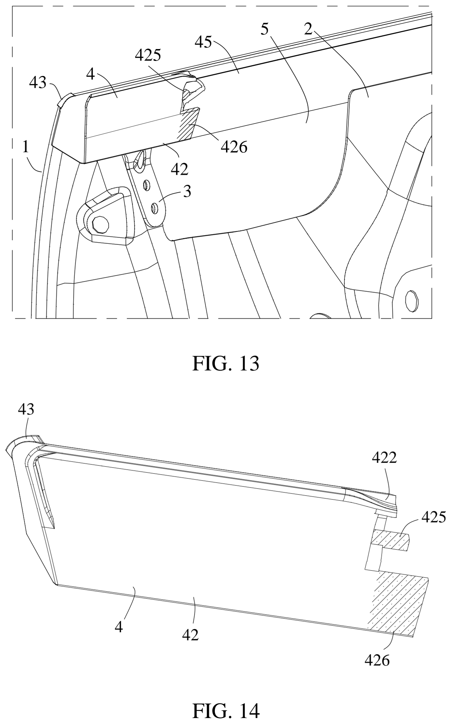

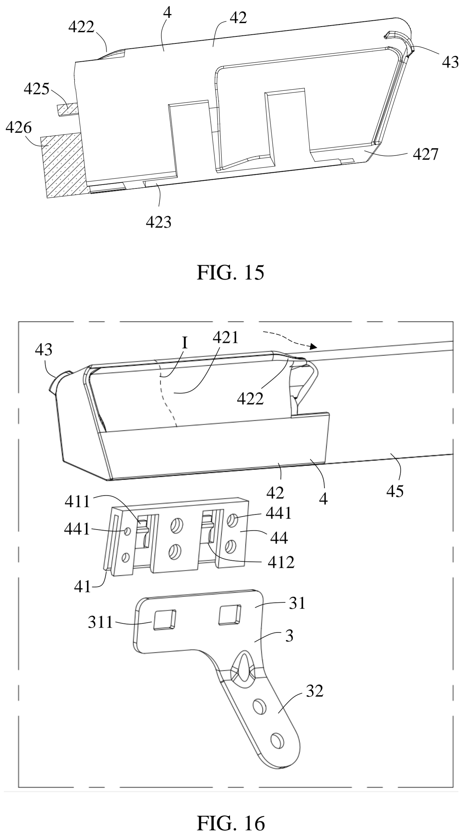

An embodiment of the present disclosure provides a vehicle with a frameless vehicle door design. As shown in FIG. 12 and FIG. 13, a front door of the vehicle includes a vehicle door outer panel 1 and a vehicle door inner panel 2 that are mutually connected. A rear upper end of the vehicle door outer panel 1 has a sharp corner feature, and the front door is further provided with a hidden outer weatherstrip assembly and a mounting bracket 3. In the present implementation, the hidden outer weatherstrip assembly includes a weatherstrip joint corner 4, which forms a rear end of the outer weatherstrip assembly and is provided with a slot 41 (not shown in FIGS. 12 and 13, please refer to FIG. 16). The slot 41 is used to be in an inserting connection with the mounting bracket 3 fixed on the vehicle door inner panel 2, so that the weatherstrip joint corner 4 can be firmly installed on the vehicle door.

Based on aforementioned matching relationship between the hidden outer weatherstrip assembly and the mounting bracket 3, an embodiment further provides a vehicle door structure for a front vehicle door, the vehicle door structure includes an aforesaid outer weatherstrip assembly, an aforesaid mounting bracket 3, connected vehicle door outer panel 1 and vehicle door inner panel 2. The mounting bracket 3 is fixed on the vehicle door inner panel 2, and a part of the mounting bracket is spaced apart from the vehicle door inner panel 2; the weatherstrip joint corner 4 is inserted into the part of the mounting bracket 3. It can be understood that both the above hidden outer weatherstrip assembly and the above vehicle door structure are not limited to be applied to the front vehicle door, but can be applied to any vehicle door of the vehicle.

For the above front vehicle door, the following are more detailed exemplary settings.

As shown in FIG. 14 and FIG. 15, the weatherstrip joint corner 4 includes a joint corner body 42 and an edge wrapping portion 43, the edge wrapping portion 43 is formed by extending outward from the joint corner body 42. As shown in FIG. 13, the edge wrapping portion 43 is used to wrap and closely fitted to the sharp corner of the vehicle door outer panel 1, in order to solve the problem mentioned in the above embodiment that the door with a hidden outer weatherstrip assembly and with the sharp corner is prone to collision with passengers when it is opened. It can be understood that for the edge wrapping portion 43 covering the sharp corner of the vehicle door outer panel 1, it can be either partial covering or complete covering, depending on the practical requirements.

Please continue to refer to FIG. 16. The mounting bracket 3 of the present embodiment is roughly L-shaped with a corner feature facing backwards. The mounting bracket 3 includes a first plate body 31 and a second plate body 32 that are connected as an one-piece. The first plate body 31 is provided along a length direction of the joint corner body 42, and the second plate body 32 is formed by extending downwards from a front end of the first plate body 31. The first plate body 31 is a part of the mounting bracket 3 that is spaced apart from the vehicle door inner panel 2, and the second plate body 32 is a part of the mounting bracket 3 that is fixedly connected to the vehicle door inner panel 2. In the present embodiment, an implementation of spacing the first plate body 31 from the vehicle door inner panel 2 is as follows: from a connection with the second plate body 32, the first plate body 31 is folded in a direction away from the vehicle door inner panel 2. The fixed connection method between the second plate body 32 and the vehicle door inner panel 2 is bolted connection. It can be understood that the second plate body 32 can further be fixedly connected to the vehicle door inner panel 2 through welding or riveting.

Please continue to refer to FIG. 15 and FIG. 16. For example, in addition to the above joint corner body 42, the weatherstrip joint corner 4 further includes an adapter 44 that is integrated with the joint corner body 42. The adapter 44 is located in the joint corner body 42 and serves to form the above-mentioned slot 41 on the weatherstrip joint corner 4. In other words, the above slot 41 is a feature provided on the adapter 44.

For example, the adapter 44 in an embodiment is a plastic part and is roughly a U-shaped structure with an opening facing downwards. A slot with an opening facing downwards in this U-shaped structure is the slot 41.

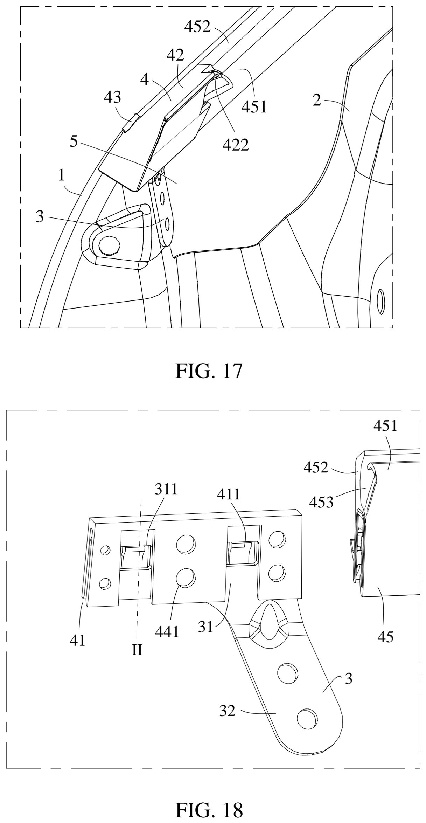

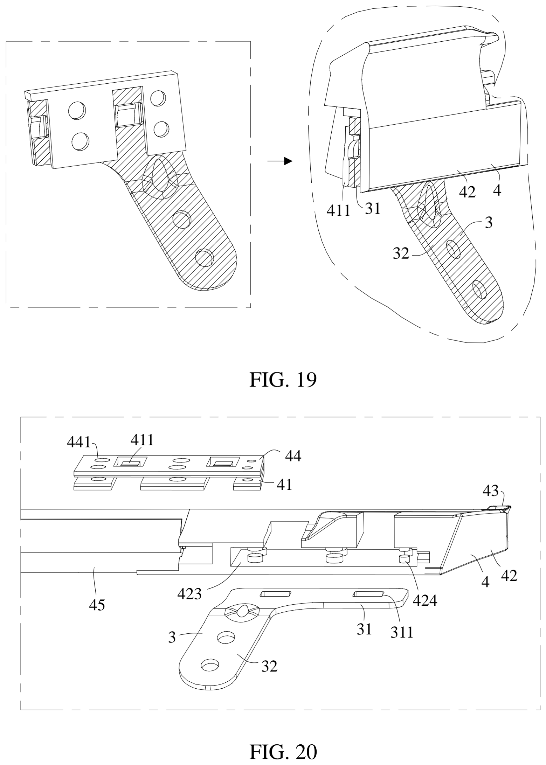

Please continue to refer to FIG. 16 and FIG.17. In order to achieve the design of the slot 41 being in an inserting connection with the mounting bracket 3 fixed on the vehicle door inner panel 2, and to ensure stability of the connection between the weatherstrip joint corner 4 and the mounting bracket 3, in an embodiment, a clamping protrusion 411 is provided on a side wall of the slot 41 close to the vehicle door inner panel 2, and a clamping hole 311 is provided on the first plate body 31. The slot 41 is configured for allowing insertion of the first plate body 31. After the first plate body 31 is matched with the slot 41, the clamping protrusion 411 and the clamping hole 311 are in clamping connection in an up-down direction. At this time, as shown in FIG. 18 and FIG. 19 (for the convenience of illustration, the mounting bracket 3 is filled in FIG. 19), the clamping protrusion 411 is blocked on a lower side of an upper edge of the clamping hole 311, such that the mounting bracket 3 is under an upward pressure, and the upper end surface of the first plate body 31 is abutted with a bottom wall of the slot 41. In this way, by means of the adapter 44 which is integrated with the joint corner body 42, the weatherstrip joint corner 4 is clamped with the mounting bracket 3 in the up-down direction, thus forming a tight connection.

It should be noted that the clamping connection between the clamping protrusion and the clamping hole is configured such that the clamping protrusion is stopped on the lower side of the upper edge of the clamping hole and applies upward pressure on the mounting bracket. After the clamping protrusion is clamped into the clamping hole, on the premise that the upper end surface of the first plate body is abutted with the bottom wall of the slot, the positions of the clamping protrusion 411 and the clamping hole 311 can be reversely disposed. That is to say, in a possible embodiment, the clamping protrusion 411 can be provided on the first plate body 31, and the clamping hole 311 can be provided on the adapter 44.

It should be noted that if the clamping protrusion 411 or the clamping hole 311 is provided on the adapter 44, the position of the clamping protrusion 411 or the clamping hole 311 is further a flexible setting item. For example, the clamping protrusion 411 or the clamping hole 311 can be provided on a side wall of the slot 41 close to the vehicle door inner panel 2, or on a side wall of the slot 41 away from the vehicle door inner panel 2. When the clamping protrusion 411 or the clamping hole 311 is provided on the first plate body 31, similar arrangement applies.

Please refer back to FIG. 16. In an embodiment, an exemplary setting for the clamping protrusion 411 is that: the clamping protrusion 411 is a vertically arranged irregular strip. In addition, to provide the clamping protrusion 411, a penetrating area 412 is provided on the side wall of the slot 41 and penetrates through it in a left-right direction. The clamping protrusion 411 is located in the penetrating area 412, and a lower end of the clamping protrusion 411 is a fixed end that is integrated with an edge of the penetrating area 412. An upper end of the clamping protrusion 411 is a free end with a gap between it and the edge of the penetrating area 412. Based on a design of both the free end and the fixed end, the clamping protrusion 411 is configured to be able to undergo elastic deformation to a certain extent. In the present embodiment, the free end of the clamping protrusion 411 is provided with a portion protruding towards an interior of the vehicle, which is used to clamp into the clamping hole 311. To be more specific, when the mounting bracket 3 is inserted into the slot 41, first, the clamping protrusion 411 is squeezed out to make clamping protrusion 411 undergo elastic deformation, and then the mounting bracket 3 is inserted into a bottom of the slot 41. As the upper end face of the mounting bracket 3 contacts the bottom of the slot 41, the solid part located on the upper side of the clamping hole 311 completely passes over the clamping protrusion 411, and the clamping protrusion 411 is clamped into the clamping hole 311 under the action of elastic force, applying upward pressure on the mounting bracket 3. At such, the clamping protrusion 411 forms a stopper that prevents the downward movement of the mounting bracket 3, and the bottom of the slot 41 forms a stopper that prevents the upward movement of the mounting bracket 3.

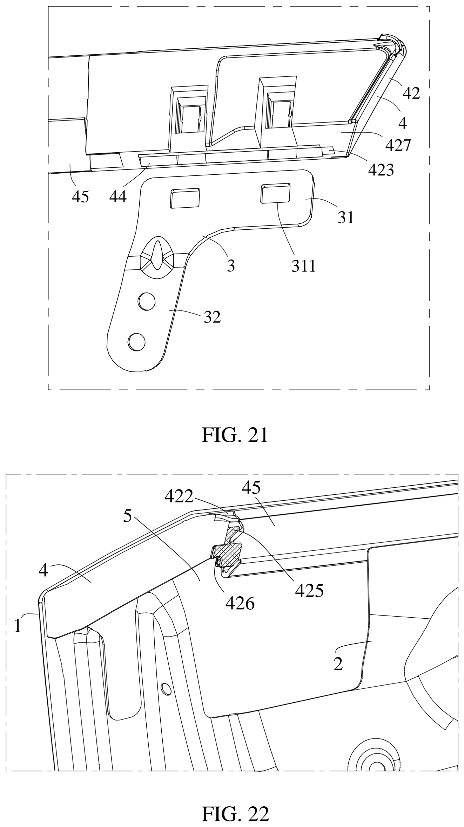

Please continue to refer to FIG. 20 and FIG. 21. To ensure a tight connection between the joint corner body 42 and the adapter 44, the weatherstrip joint corner 4 is configured to be injection molded using the adapter 44 serving as an insertion. During an injection molding process of the insertion, a groove 423 is naturally formed on the joint corner body 42 for accommodating the adapter 44. For example, to further ensure reliability of the connection between the joint corner body 42 and the adapter 44, the adapter 44 is provided with a matching hole 441 that penetrates through it. Correspondingly, during the injection molding of the insertion, a protrusion 424 that precisely fills the matching hole 441 is naturally formed on the joint corner body 42. In the present embodiment, the matching holes 441 are provided on the two opposing inner side walls forming the slot 41. Therefore, as shown in FIG. 20, the protrusions 424 are formed on the two opposing inner side walls of groove 423.

Please refer back to FIG. 16, where a contour I of a surface of the weatherstrip joint corner 4 expected to face the vehicle door is indicated by a dashed line I in FIG. 16. On the surface of the joint corner body 42 facing the interior of the vehicle, there is a recessed portion 421 formed by recessing outwards from the interior of the vehicle. Both the joint corner body 42 located on an upper side of the recessed portion 421 and the joint corner body 42 located on a lower side of the recessed portion 421 protrude towards the interior of the vehicle relative to the recessed portion 421 for passengers to grip when opening and closing the front door.

Specifically, the recessed portion 421 is located at the upper part of the joint corner body 42. For the joint corner body 42 located on the lower side of the recessed portion 421 and the joint corner body 42 located on the upper side of the recessed portion 421, both parts can be used as gripping portions for passengers when pushing and pulling the door. When sitting in the vehicle and needs to push or pull the front vehicle door, a passenger can put his fingers into the recessed portion 421, and his palm contacts the joint corner body 42 located on the lower side of the recessed portion 421, applying force naturally to push or pull the vehicle door. Similarly, when the passenger is located on the outer side of the front vehicle door and needs to push or pull the front vehicle door, he can place his palm on the joint corner body 42 located on the upper side of the recessed portion 421, and inserts his fingers into the recessed portion 421 to apply force naturally.

Please continue to refer to FIG. 16. The joint corner body 42 located on the lower side of the recessed portion 421 is configured to have a certain surface area facing the interior of the vehicle. Therefore, according to the specific requirements of the person skilled in the art, the texture that enhance passenger's sense of grip and/or identification of a vehicle brand marking can be provided on the joint corner body 42 located on the lower side of the recessed portion 421.

Please continue to refer to FIG. 16 and FIG. 17. The outer weatherstrip assembly in the present embodiment further includes a weatherstrip body 45 integrated with the joint corner body 42. The weatherstrip body 45 is a part of the outer weatherstrip assembly that can be in contact with the glass of a front vehicle door (not shown in figures). The weatherstrip body 45 is located on a front side of the mounting bracket 3, and is spaced apart from the mounting bracket 3.

For example, an end of the joint corner body 42 close to the weatherstrip body 45 is provided with an arc-shaped transition portion 422. From back to front, the arc-shaped transition portion 422 gradually descends downward from a top wall of the joint corner body 42 and is in contact with the weatherstrip body 45, causing one corner of the joint corner body 42 to have an inclined posture towards the weatherstrip body 45. In addition, the arc-shaped transition portion 422 is configured to have a part that adheres to and contacts the weatherstrip body 45 regardless of whether the weatherstrip body 45 is in contact with the front vehicle door glass.

Please continue to refer to FIG. 17 and FIG. 18. The weatherstrip body 45 includes an inner lip edge 451 and an outer lip edge 452 that are connected as a whole. A lower end of the inner edge lip 451 and a lower end of the outer lip edge 452 are connected with each other, and the inner lip edge 451 and the outer lip edge 452 gradually separate upwards from their respective lower ends, forming a trench 453 on the weatherstrip body 45. Moreover, there is a cavity 5 between the vehicle door outer panel 1 and the vehicle door inner panel 2, the cavity 5 being configured to allow water entering it to flow out of the vehicle through it. In the present embodiment, an intersection of the weatherstrip body 45 and the weatherstrip joint corner 4 is configured so that water can flow into the cavity 5 through it. In this way, during a driving process of the vehicle, if there is rain outside or during washing the vehicle, if there is water flowing to the arc-shaped transition portion 422 or water expected to flow towards the weatherstrip joint corner 4 through the weatherstrip body 45, the arc-shaped transition portion 422 can use its inclined posture towards the weatherstrip body 45 to guide the water as much as possible towards the weatherstrip body 45 (please refer to the dashed arrow indicated in FIG. 16), or directly let the water flow into the cavity 5 as much as possible.

As mentioned above, the inner lip edge 451 is a portion of the weatherstrip body 45 that adheres to and is in contact with the arc-shaped transition portion 422. The weatherstrip joint corner 4 located on the arc-shaped transition portion 422 close to the outer side of the vehicle is in contact with and aligned with the outer lip edge 452.

Regarding the above description, it should be noted that the design of the cavity 5 for allowing water entering it to drain outside the vehicle belongs to the prior art. The specific drainage action can be achieved by means such as opening a drainage hole in the lower part of the vehicle door inner panel 2. This article will not repeat on this in detail.

Regarding the description of "water expected to flow towards the weatherstrip joint corner 4 through the weatherstrip body 45", it should be noted that this description is made because in a possible embodiment, after the front vehicle door glass is matched with the weatherstrip body 45, the front vehicle door glass is located on the inner lip edge 451 facing the inner side of the vehicle and will apply pressure to the inner lip edge 451, causing deformation of the inner lip edge 451. The deformed inner lip edge 451 may be configured to tilt towards the outer lip edge 452, making the trench 453 a cylindrical channel with a closed upper part. Based on this, when a vehicle encounters water, it may experience a phenomenon of "water expected to flow towards the weatherstrip joint corner 4 through the weatherstrip body 45".

Regarding the above "an intersection of the weatherstrip body 45 and the weatherstrip joint corner 4 is configured so that water can flow into the cavity 5 through it", it should be noted that on the premise of knowing a principle of this arrangement, the way to achieve this water flow path can be flexibly set by the person skilled in the art. For example, in a possible embodiment, if other components need to be arranged at the intersection of the weatherstrip body 45 and the weatherstrip joint corner 4 (such as the inner weatherstrip in the second embodiment), by adjusting a shape of the inner weatherstrip, the inner weatherstrip and the intersection of the weatherstrip body 45 with the weatherstrip joint corner 4 are spaced apart from each other, thereby leaving an entrance to the interior of the cavity 5. This can achieve an effect of water flowing into the cavity 5 through the intersection of the weatherstrip body 45 and the weatherstrip joint corner 4. At this time, an orientation of the front vehicle door glass can be based on an orientation of the vehicle door glass shown in FIG. 11.

Furthermore, as can be seen from the above, when the inner lip edge 451 is under pressure from the front vehicle door glass, a distance between the inner lip edge 451 and the outer lip edge 452 will change, thereby altering the shape of the trench 453. It should be noted that this belongs to the prior art. In the present embodiment, FIG. 16 and FIG. 17 show the posture of the inner lip edge 451 when it is not under pressure from the vehicle door glass.

Please continue to refer to FIG. 15 to FIG. 17. In the present embodiment, the weatherstrip body 45 is a rubber product obtained by extrusion molding. The weatherstrip body 45 extends at least partially into a mold used for injection molding the weatherstrip joint corner 4, and then is connected with the weatherstrip joint corner 4 as a whole during the injection molding process of the weatherstrip joint corner 4. For example, the weatherstrip joint corner 4 is a rubber product. For example, in order to enhance a tightness of the connection between the weatherstrip joint corner 4 and the weatherstrip body 45, as shown in FIG. 13 to FIG. 15, in the present embodiment, a first protruding portion 425 and a second protruding portion 426 (for the convenience of illustration, both of them are filled in the figure) are provided on an end of the joint corner body 42 close to the weatherstrip body 45, where the first protruding portion 425 is formed on the inner lip edge 451 close to the outer side of the vehicle and adheres to the outer lip edge 452 in the trench 453 (this detail is not shown in the figure), and the second protruding portion 426 is formed on the inner lip edge 451 close to the outer side of the vehicle and adheres to the inner lip edge 451.

It should be noted that a connection method between the weatherstrip joint corner 4 and the weatherstrip body 45 is not limited to the above scheme. According to the specific requirements of the person skilled in the art, both of them can also be connected together by bonding, such as by hot vulcanization bonding.

It should also be noted that, thanks to the design where the weatherstrip joint corner 4 and the weatherstrip body 45 do not need to be molded at the same time, the weatherstrip joint corner 4 can be provided at a certain angle relative to the weatherstrip body 45, thereby expanding diversity of an appearance design of the vehicle door structure.

For example, as shown in FIG. 22, the weatherstrip joint corner 4 can be arranged on a rear vehicle door, a rear of the rear vehicle door has an appearance design that tilts towards the interior of the vehicle. The rear vehicle door is also provided with the above vehicle door outer panel 1, vehicle door inner panel 2, and weatherstrip body 45. On the rear vehicle door, the weatherstrip joint corner 4 is also provided with the first protruding portion 425 and the second protruding portion 426 (for the convenience of illustration, both of them have been filled) to enhance its tight connection with the weatherstrip body 45. Here, the weatherstrip joint corner 4 is significantly inclined towards the interior of the vehicle relative to the weatherstrip body 45, thus adapting well to the appearance design of the rear of the vehicle door tilting towards the interior of the vehicle. It should be noted that according to the specific requirements of the person skilled in the art, the rear vehicle door can have any of the settings mentioned above that can be applied to the front vehicle door.

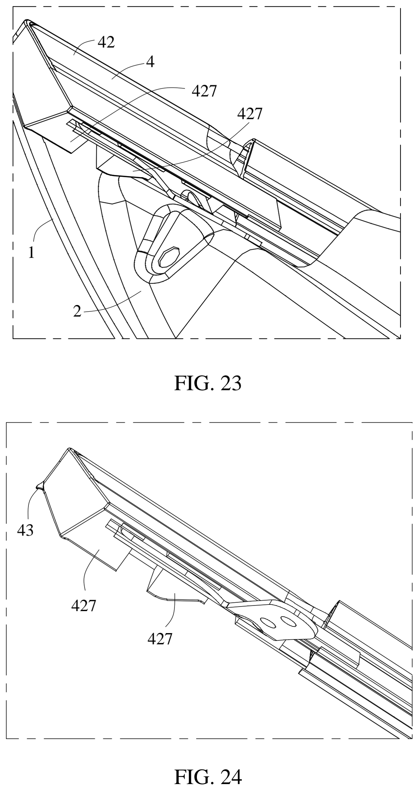

Please continue to refer to FIG. 22 and FIG. 23. On the surface of the joint corner body 42 towards the outside of the vehicle, there is also a Position supplement portion 427 protruding towards the outside of the vehicle relative to its own peripheral side. The presence of the Position supplement portion 427 allows the rear end of the weatherstrip joint corner 4 to be in contact with the vehicle door outer panel 1 and the vehicle door inner panel 2, visually giving an impression that the vehicle door structure is compact and mutually connected as a whole. To be more specific, a reason for setting the Position supplement portion 427 includes: after the assembly of the vehicle door outer panel 1 and the vehicle door inner panel 2, a large difference in sheet metal thickness will be formed close to the rear edge of the front vehicle door in the left and right directions. At the same time, in the present embodiment, the weatherstrip joint corner 4 is configured to be exposed to a visible range of the passenger's naked eye, so as to ensure that the passenger does not see a gap either between the rear end of the weatherstrip joint corner 4 and the vehicle door outer panel 1 or between the rear end of the weatherstrip joint corner 4 and the vehicle door inner panel 2 when observing the front vehicle door from a diagonal downward direction. In an embodiment, the position supplement portion 427 is provided on the weatherstrip joint corner 4.

In summary, by providing a hidden outer weatherstrip assembly with the slot 41 on it, in this application, the outer weatherstrip assembly can be connected with the vehicle door inner panel 2 through the mounting bracket 3, and thus be connected with the vehicle door inner panel 2 through a physical mounting structure, ensuring the mounting stability of the outer weatherstrip assembly.

The above descriptions are only optional embodiments of the present application and do not limit the patent scope of the present application. Any equivalent structural transformation made under the application concept of the present application using the content of the present application specification and drawings, or its direct/indirect application in other related technical fields, are included in the patent protection scope of the present application.

## Claims

1. A hidden outer weatherstrip assembly, comprising a weatherstrip joint corner, wherein the weatherstrip joint corner forms an end of the outer weatherstrip assembly and is provided with a slot; the slot is configured to be in an inserting connection with a mounting bracket fixed to a vehicle door inner panel.

2. The hidden outer weatherstrip assembly according to claim 1, further comprising a weatherstrip body connected with the weatherstrip joint corner, wherein the weatherstrip body is configured to be in contact with a vehicle door glass and is spaced apart from the mounting bracket.

3. The hidden outer weatherstrip assembly according to claim 1, wherein the weatherstrip joint corner comprises a joint corner body, and a surface of the joint corner body expected to face an interior of a vehicle is provided with a recessed portion; both the joint corner body located on an upper side of the recessed portion and the joint corner body located on a lower side of the recessed portion protrude towards an interior of the vehicle relative to the recessed portion.

4. The hidden outer weatherstrip assembly according to claim 3, wherein the recessed portion is located at an upper part of the joint corner body; the joint corner body located on the lower side of the recessed portion is a portion for grasping.

5. The hidden outer belt weatherstrip assembly according to claim 3, wherein the surface of the joint corner body expected to face the interior of the vehicle is provided with a texture and/or a marking.

6. A vehicle door structure, comprising:
a hidden outer weatherstrip assembly according to any one of claims 1 to 5, a mounting bracket, a vehicle door outer panel and a vehicle door inner panel that are connected with each other; the mounting bracket is fixed on the vehicle door inner panel, and a part of the mounting bracket is spaced apart from the vehicle door inner panel; the weatherstrip joint corner is inserted into the part of the mounting bracket.

7. The vehicle door structure according to claim 6, wherein the mounting bracket comprises a first plate body and a second plate body that are connected with each other; the first plate body is the part of the mounting bracket that is spaced apart from the vehicle door inner panel, and the second plate body is a part of the mounting bracket that is fixedly connected with the vehicle door inner panel; the first plate body is folded in a direction away from the vehicle door inner panel so as to be spaced apart from the vehicle door inner panel.

8. The vehicle door structure according to claim 7, wherein the first plate body is folded in a direction away from the vehicle door inner panel from a connection with the second plate body; one of a side wall of the slot and the first plate body is provided with a clamping hole, and the other is provided with a clamping protrusion; the clamping protrusion is clamped with the clamping hole such that the clamping protrusion is stopped on a lower side of an upper edge of the clamping hole and exerts upward pressure on the mounting bracket, and an upper end surface of the first plate body is abutted with a bottom wall of the slot.

9. The vehicle door structure according to claim 8, wherein a side wall of the slot close to the vehicle door inner panel is provided with the clamping protrusion, or a side of the first plate body facing towards the vehicle door inner panel is provided with the clamping protrusion;
the clamping hole is provided on the first plate body, or on the side wall of the slot close to the vehicle door inner panel.

10. The vehicle door structure according to claim 8 or 9, wherein the weatherstrip joint corner comprises a joint corner body and an adapter that are connected with each other, and the adapter is located in the joint corner body, and is provided with the slot.

11. The vehicle door structure according to claim 10, wherein the side wall of the slot is provided with a penetrating area, and the clamping protrusion is located in the penetrating area; a lower end of the clamping protrusion is a fixed end that is integrated with an edge of the penetrating area, and an upper end of the clamping protrusion is a free end with a gap between the clamping protrusion and the edge of the penetrating area; the free end of the clamping protrusion is provided with a portion for clamping into the clamping hole.

12. The vehicle door structure according to claim 10, wherein the weatherstrip joint corner is formed by injection molding process using the adapter as an insertion; the joint corner body is provided with a groove, and the groove is, during injection molding, a part formed on the joint corner body to accommodate the adapter;
the adapter is provided with a matching hole; the groove is provided with a protrusion, and the protrusion is, during injection molding, a solid formed on the joint corner body to extend into the matching hole.

13. The vehicle door structure according to claim 6, wherein the weatherstrip joint corner comprises a joint corner body and an edge wrapping portion; the vehicle door structure comprises the vehicle door outer panel provided on an outer side of the vehicle door inner panel; a rear end of the vehicle door outer panel is provided with a sharp corner; the edge wrapping portion is formed by extending outwards from the joint corner body; the edge wrapping portion wraps and adheres to the sharp corner of the vehicle door outer panel.

14. The vehicle door structure according to claim 6, wherein the weatherstrip joint corner comprises a joint corner body, and the outer weatherstrip assembly further comprises a weatherstrip body connected with the joint corner body; an end of the joint corner body close to the weatherstrip body is provided with an arc-shaped transition portion; the arc-shaped transition portion is formed by extending downward from a top wall of the joint corner body, in a direction from an end of the arc-shaped transition portion away from the weatherstrip body to an end of the arc-shaped transition portion close to the weatherstrip body; the arc-shaped transition portion is in contact with the weatherstrip body.

15. The vehicle door structure according to claim 14, wherein the weatherstrip body comprises an inner lip edge and an outer lip edge that are connected as a whole; a lower end of the inner lip edge and a lower end of the outer lip edge are connected with each other, and the inner lip edge and the outer lip edge gradually separate from each other upwards from their respective lower ends; a cavity is provided between the vehicle door outer panel and the vehicle door inner panel, the cavity being configured to allow water entering the cavity to flow out of the vehicle through the cavity; an intersection of the weatherstrip body and the weatherstrip joint corner is configured to allow water to flow into the cavity through the intersection.

16. The vehicle door structure according to claim 15, wherein the arc-shaped transition portion is in contact with the inner lip edge; the weatherstrip joint corner located at the arc-shaped transition portion and close to an outer side of the vehicle is aligned with the outer lip edge; the arc-shaped transition portion is configured to allow water to flow from the arc-shaped transition portion to the weatherstrip body.

17. The vehicle door structure according to claim 15, wherein the weatherstrip body is an extrusion-molded product; the weatherstrip joint corner is integrated with the weatherstrip body through injection molding; an end of the weatherstrip joint corner close to the weatherstrip body is provided with a first protruding portion and a second protruding portion; the first protruding portion is formed on the inner lip edge close to the outer side of the vehicle and adheres to the weatherstrip body; the second protruding portion is formed on the inner lip edge close to the outer side of the vehicle and adheres to the inner lip edge.

18. A vehicle, comprising:
the vehicle door structure according to any one of claims 6 to 17, wherein the belt weatherstrip joint corner forms a rear end of the outer belt weatherstrip assembly.

19. A hidden outer weatherstrip assembly, comprising a weatherstrip joint corner, wherein the weatherstrip joint corner comprises a joint corner body and an edge wrapping portion; the weatherstrip joint corner forms a rear end of the outer weatherstrip assembly; the edge wrapping portion is formed by extending outwards from the joint corner body; the edge wrapping portion is configured to wrap and adhere to a sharp corner of avehicle door outer panel.

20. The hidden outer weatherstrip assembly according to claim 19, wherein a surface of the joint corner body expected to face an interior of a vehicle is provided with a recessed portion; both the joint corner body located on an upper side of the recessed portion and the joint corner body located on a lower side of the recessed portion protrude towards the interior of the vehicle relative to the recessed portion.

21. The hidden outer belt weatherstrip assembly according to claim 20, wherein the recessed portion is located at an upper part of the joint corner body; the joint corner body located on the lower side of the recessed portion is a portion for grasping.

22. The hidden outer belt weatherstrip assembly according to claim 19, wherein a surface of the joint corner body expected to face the interior of the vehicle is provided with a texture and/or a marking.

23. The hidden outer weatherstrip assembly according to claim 19, wherein the outer weatherstrip assembly further comprises a weatherstrip body that is connected with the joint corner body in a matching manner; an end of the joint corner body close to the weatherstrip body is provided with an arc-shaped transition portion, the arc-shaped transition portion is formed by extending downward from a top wall of the joint corner body, in a direction from an end of the arc-shaped transition portion away from the weatherstrip body to an end of the arc-shaped transition portion close to the weatherstrip body; the arc-shaped transition portion is in contact with the weatherstrip body.

24. The hidden outer belt weatherstrip assembly according to claim 23, wherein the arc-shaped transition portion is in contact with an inner lip edge; the weatherstrip joint corner located at the arc-shaped transition portion and close to an outer side of the vehicle is aligned with the outer lip edge; the arc-shaped transition portion is configured to allow water to flow from the arc-shaped transition portion to the weatherstrip body.

25. The hidden outer belt weatherstrip assembly according to claim 23, wherein the belt weatherstrip body is an extruded product; the belt weatherstrip joint corner is integrated with the belt weatherstrip body through injection molding; an end of the belt weatherstrip joint corner close to the belt weatherstrip body is provided with a first protruding part and a second protruding part, the first protruding part is formed on the inner lip edge close to the outer side of the vehicle and adheres to the belt weatherstrip body, the second protruding part is formed on the inner lip edge close to the outer side of the vehicle and adheres to the inner lip edge.

26. A vehicle, comprising: the hidden outer weatherstrip assembly according to any one of claims 19 to 25.

27. The vehicle according to claim 26, further comprising an inner belt weatherstrip, the inner belt weatherstrip is provided with a joint corner part located at its rear end, and the joint corner part has a part extending to a lower side of the belt weatherstrip joint corner.
